# EUROPEAN PATENT APPLICATION

(11) **EP 3 900 993 A1**
(43) Date of publication of application: **27.10.2021**
(21) Application number: 20783008.4
(22) Date of filing: 06.03.2020
(51) Int. Cl.: B60W 30/02, B60T 7/12, B60W 50/00, B62D 6/00, B62D 101/00, B62D 103/00, B62D 111/00, B62D 113/00, B62D 137/00

(54) **VEHICLE TRAVEL CONTROL DEVICE**

(30) Priority: 29.03.2019 JP 2019068280
(71) Applicant: MAZDA MOTOR CORPORATION, Hiroshima 730-8670 (JP)
(72) Inventor: SAKASHITA, Shinsuke, Aki-gun, Hiroshima 730-8670 (JP); HORIGOME, Daisuke, Aki-gun, Hiroshima 730-8670 (JP); ISHIBASHI, Masato, Aki-gun, Hiroshima 730-8670 (JP); HOJIN, Eiichi, Aki-gun, Hiroshima 730-8670 (JP)
(74) Representative: Frick, Robert
(86) International application number: PCT/JP2020/009817
(87) International publication number: WO 2020/203057

(57) **Abstract**

A vehicle travel control device includes: a computation device (110); and a plurality of device controllers configured to control actuation of a plurality of traveling devices. The computation device (110) includes a vehicle outdoor environment identifier (111) configured to identify a vehicle outdoor environment, route setters (112 to 115) configured to set a route on which a vehicle is to travel, a vehicle motion determiner (116) configured to determine a target motion of the vehicle, and physical quantity calculators (117 to 119) configured to calculate target physical quantities to be generated by the traveling devices so as to achieve the target motion. The physical quantity calculators (117 to 119) are communicable with one another, and configured to calculate target physical quantities with which control of causing the traveling devices to operate in coordination with one another is performed.

## Description

### TECHNICAL FIELD

The technique disclosed here relates to a technology concerning a vehicle travel control device.

### BACKGROUND ART

A vehicle travel control device known to date controls a plurality of on-vehicle device for travel mounted on a vehicle.

As such a vehicle travel control device, Patent Document 1, for example, describes a control system that is hierarchized into device control parts for controlling a plurality of on-vehicle devices and domain control parts for managing the device control parts in a plurality of domains previously defined in accordance with functions of the on-vehicle devices. The control system also includes an integrated control part located at a higher rank than the domain control parts and manages the domain control parts.

In Patent Document 1, the device control parts calculate controlled variables of the corresponding on-vehicle devices, and output control signals for achieving the controlled variables to the on-vehicle devices.

### CITATION LIST

### PATENT DOCUMENT

Patent Document 1: Japanese Patent Application Publication No. 2017-61278

### SUMMARY OF THE INVENTION

### TECHNICAL PROBLEM

In recent years, development of automated driving systems has been promoted on a national scale. In general, in an automated driving system, vehicle outdoor environment information is acquired by a camera or other devices, and based on the acquired vehicle outdoor environment information, a route on which a vehicle is to travel is calculated. In the automated driving system, traveling devices are controlled in order to follow the route to be traveled.

Here, following a travel route is conducted by adjusting physical quantities (e.g., a driving force and a steering variable) generated by traveling devices. At this time, to avoid providing a driver with an incongruity sense such as a sudden increase or decrease in the speed of a vehicle, it is necessary to calculate such physical quantities that achieve optimum motion of the vehicle at each moment.

The technique disclosed here has been made in view of the foregoing situations, and has an object of enhancing responsiveness of a traveling device to vehicle outdoor environments in a vehicle travel control device that controls actuation of traveling device so as to follow a route calculated by a computation device and is capable of achieving a vehicle behavior that hardly provides a driver with an incongruity sense.

### SOLUTION TO THE PROBLEM

To solve problems described above, the technique disclosed here provides a configuration of a vehicle travel control device including: a computation device; and a plurality of device controllers configured to individually control actuation of a plurality of traveling devices mounted on the vehicle, based on a computation result of the computation device, wherein the computation device includes a vehicle outdoor environment identifier configured to identify a vehicle outdoor environment based on an output from an image acquirer, the image acquirer being configured to acquire a vehicle outdoor environment, a route setter configured to set a route on which the vehicle is to be travel, in accordance with the vehicle outdoor environment identified by the vehicle outdoor environment identifier, a target motion determiner configured to determine a target motion of the vehicle for following the route set by the route setter, and a plurality of physical quantity calculators configured to calculate target physical quantities to be generated by the traveling devices, in order to achieve the target motion determined by the target motion determiner, the physical quantity calculators are configured to be communicable with one another and to calculate target physical quantities with which control of causing the traveling devices to operate in coordination with one another is performed, and the device controllers calculate controlled variables of the traveling devices such that the target physical quantities calculated by the physical quantity calculators are achieved, and the device controllers output control signals to the traveling devices.

With this configuration, the physical quantity calculators calculating physical quantities in, for example, driving, braking, and steering, to be generated by the traveling devices are communicable with each other, and are capable of calculating target physical quantities with which control for causing the traveling device to operate in coordination with one another. Thus, an optimum motion of the vehicle can be achieved at each moment. For example, in a state where a road is slippery, for example, it is required to reduce the rotation speed of the wheels (i.e., so-called traction control) in order to prevent idle rotation of the wheels. To reduce idle rotation of the wheels, methods of reducing a driving force as a physical quantity and of using a braking force as a physical quantity are employed. When a calculator for a driving force and a calculator for a braking force are communicable with each other, an optimum action can be taken by using both adjustment of the driving force and adjustment of the braking force. In this manner, in the vehicle travel control device that controls actuation of traveling devices so as to follow a route calculated by the computation device, it is possible to achieve a vehicle behavior that hardly provides a driver with an incongruity sense.

A cooperation control part of the traveling device are incorporated in the computation device, and actual control of the traveling devices are conducted by the device controller. Accordingly, highly accurate computation is enabled by the computation device, and response to the traveling devices by the device controller can be achieved at high speed.

The "traveling devices" herein refer to devices such as actuators and sensors that are controlled while the vehicle travels.

In the computation device for automobile, the traveling devices may include a power train-related device constituting a power train device, a brake-related device constituting a braking device, and a steering-related device constituting a steering device, the physical quantity calculators may include a driving force calculator configured to calculate a driving force generated by the power train device, a braking force calculator configured to calculate a braking force generated by the braking device, and a steering variable calculator configured to calculate a steering variable generated by the steering device, and the driving force calculator, the braking force calculator, and the steering variable calculator may be configured to be communicable with one another, and to calculate target physical quantities with which control of causing the traveling devices to operate in coordination with one another is performed.

In particular, the driving force calculator and the braking force calculator may be configured to calculate a target driving force and a target braking force based on a target steering variable calculated by the steering variable calculator.

In addition, the driving force calculator may calculate a target driving force based on a driving state of the vehicle, calculate a driving force reduction variable based on a target steering variable calculated by the steering variable calculator, and calculate a final target driving force based on the target driving force and the driving force reduction variable.

With this configuration, in turning a corner, for example, controlled variables of the power train-related device and the brake-related device are finely adjusted in accordance with a target steering variable of the steering device so that an appropriate lateral force can be applied to the vehicle, and smooth cornering can be performed. As a result, in the vehicle travel control device that controls actuation of the traveling devices so as to follow a route calculated by the computation device, a vehicle behavior that hardly provides a driver with an incongruity sense can be achieved.

### ADVANTAGES OF INVENTION

As described above, the technique disclosed here can enhance responsiveness of a traveling device to vehicle outdoor environment in a vehicle travel control device that controls operation of the traveling device so as to follow a route calculated by a computation device and is capable of achieving a vehicle behavior that hardly provides a driver with an incongruity sense.

### BRIEF DESCRIPTION OF THE DRAWINGS

[FIG. 1] A view schematically illustrating a configuration of a vehicle controlled by a vehicle travel control device according to an exemplary embodiment.
[FIG. 2] A schematic view illustrating a configuration of an engine.
[FIG. 3] A schematic view illustrating a vehicle on which a computation device is mounted.
[FIG. 4] A block diagram illustrating a control system of an automobile.

### DESCRIPTION OF EMBODIMENTS

An exemplary embodiment will be described hereinafter in detail with reference to the drawings. A "traveling device" described later in this embodiment refers to devices such as actuators and sensors that are controlled when a vehicle travels.

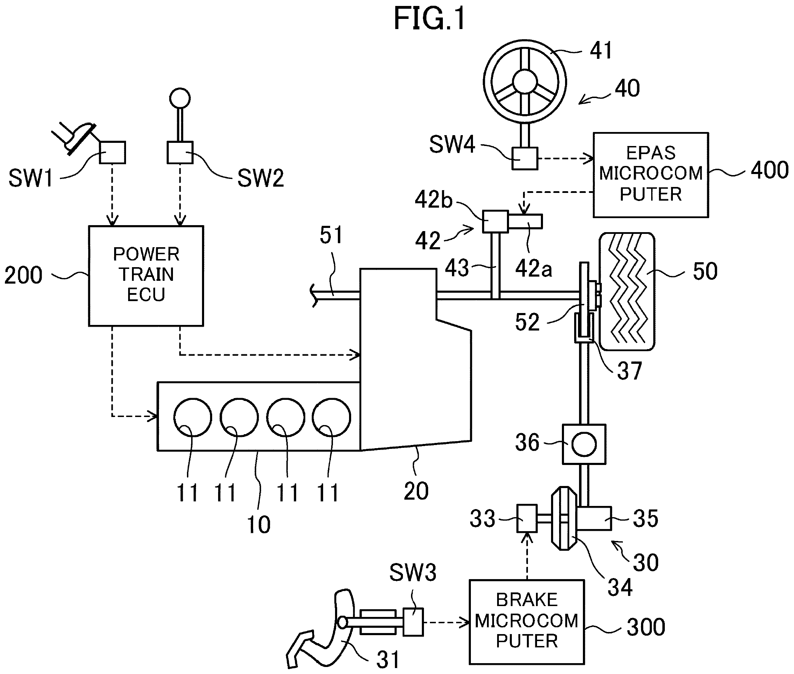

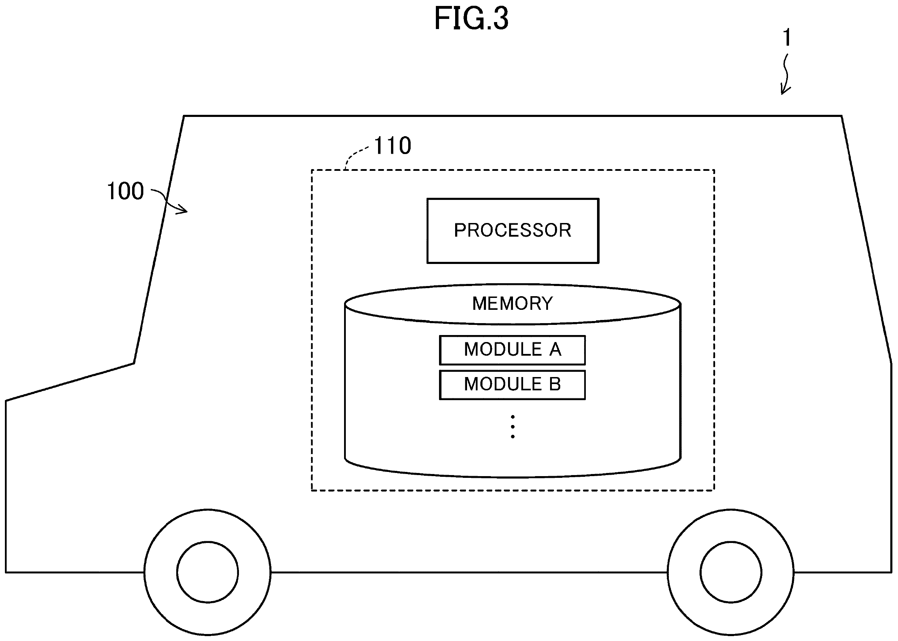

FIG. 1 schematically illustrates a vehicle 1 (see FIG. 3) that is controlled by a vehicle travel control device 100 (hereinafter referred to as a travel control device 100) according to this embodiment. The vehicle 1 is an automobile capable of operating in manual driving of traveling in accordance with an operation of, for example, an accelerator by a driver, assisted driving of traveling while assisting an operation by the driver, and automated driving of traveling without an operation by the driver.

The vehicle 1 includes an engine 10 serving as a driving source and including a plurality of (four in this embodiment) cylinders 11, a transmission 20 coupled to the engine 10, a braking device 30 that brakes rotation of front wheels 50 as driving wheel, and a steering device 40 that steers the front wheels 50 as steered wheels.

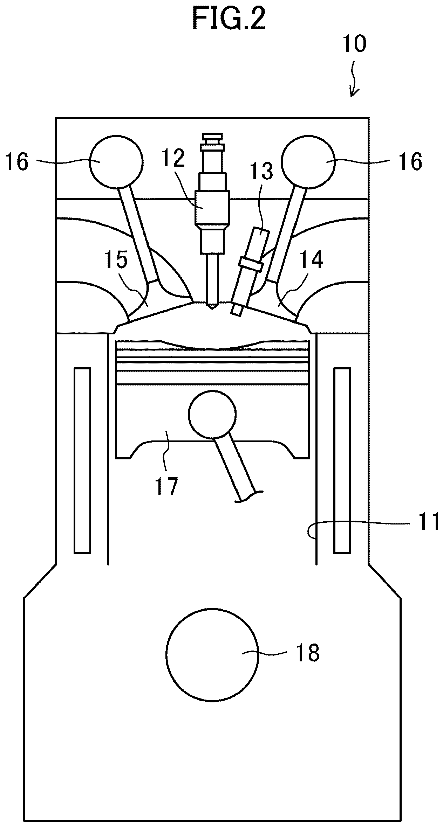

The engine 10 is, for example, a gasoline engine. As illustrated in FIG. 2, each of the cylinders 11 of the engine 10 is provided with an injector 12 for supplying fuel into the cylinder 11 and an ignition plug 13 for igniting an air-fuel mixture of fuel and intake air supplied into the cylinder 11. The engine 10 includes, for each of the cylinders 11, an intake valve 14, an exhaust valve 15, and a valve mechanism 16 for adjusting opening/closing operations of the intake valve 14 and the exhaust valve 15. The engine 10 also includes a piston 17 that reciprocates in the cylinders 11, and a crankshaft 18 coupled to the piston 17 through a connecting rod. The engine 10 may be a diesel engine. In the case where the engine 10 is the diesel engine, the ignition plug 13 may not be provided. The injector 12, the ignition plug 13, and the valve mechanism 16 are examples of power train-related devices.

The transmission 20 is, for example, a multistep automatic transmission. The transmission 20 is disposed at one side of the cylinder line of the engine 10. The transmission 20 includes an input shaft (not shown) coupled to the crankshaft 18 of the engine 10 and an output shaft (not shown) coupled to the input shaft through a plurality of speed-reducing gears (not shown). The output shaft is coupled to an axle 51 of the front wheels 50. Rotation of the crankshaft 18 is subjected to a gear shift by the transmission 20, and is transferred to the front wheels 50. The transmission 20 is an example of a power train-related device.

The engine 10 and the transmission 20 are power train devices that generate a driving force for enabling the vehicle 1 to travel. Actuation of the engine 10 and the transmission 20 is controlled by a power train electric control unit (ECU) 200. For example, while the vehicle 1 is in the manual driving, the power train ECU 200 controls, for example, a fuel injection amount and a fuel injection timing by the injector 12, an ignition timing by the ignition plug 13, and valve open timings and valve open periods of the intake and exhaust valves 14 and 15 by the valve mechanism 16, based on detection values of, for example, an accelerator opening sensor SW1 for detecting an accelerator opening corresponding to a manipulated variable of an accelerator pedal by the driver. While the vehicle 1 is in the manual driving, the power train ECU 200 adjusts a gear stage of the transmission 20 based on a detection result of a shift sensor SW2 for detecting an operation of a shift lever by the driver and a required driving force calculated from an accelerator opening. While the vehicle 1 is in the assisted driving or the automated driving, the power train ECU 200 basically calculates controlled variables of traveling devices (e.g., the injector 12 in this embodiment) such that a target driving force calculated by a computation device 110 described later can be obtained, and outputs a control signal to the traveling devices. The power train ECU 200 is an example of a device controller.

The braking device 30 includes a brake pedal 31, a brake actuator 33, a booster 34 connected to the brake actuator 33, a master cylinder 35 connected to the booster 34, an anti-braking system (ABS) device 36 for adjusting a braking force, and brake pads 37 for actually braking rotation of the front wheels 50. The axle 51 of the front wheels 50 is provided with disc rotors 52. The braking device 30 is an electric brake, and actuates the brake actuator 33 in accordance with a manipulated variable of the brake pedal 31 detected by a brake sensor SW3, and actuates the brake pads 37 through the booster 34 and the master cylinder 35. The braking device 30 causes the disc rotors 52 to be sandwiched by the brake pads 37 and brakes rotation of the front wheels 50 by a friction force occurring between the brake pads 37 and the disc rotors 52. The brake actuator 33 and the ABS device 36 are examples of brake-related devices.

Actuation of the braking device 30 is controlled by a brake microcomputer 300. For example, while the vehicle 1 is in the manual driving, the brake microcomputer 300 controls a manipulated variable of the brake actuator 33 based on detection values of, for example, the brake sensor SW3 for detecting a manipulated variable of the brake pedal 31 by the driver. While the vehicle 1 is in the assisted driving or the automated driving, the brake microcomputer 300 basically calculates controlled variables of traveling devices (e.g., the brake actuator 33 in this embodiment) such that a target driving force calculated by the computation device 110 described later can be obtained, and outputs control signals to the traveling devices. The brake microcomputer 300 is examples of a device controller.

The steering device 40 includes a steering wheel 41 that is operated by the driver, an electronic power assist steering (EPAS) device 42 for assisting a steering operation by the driver, and a pinion shaft 43 coupled to the EPAS device 42. The EPAS device 42 includes an electric motor 42a and a speed reducer 42b that reduces the speed of a driving force of the electric motor 42a and transfers the resulting driving force to the pinion shaft 43. The steering device 40 is a steer-by-wire steering device, and actuates the EPAS device 42 in accordance with a manipulated variable of the steering wheel 41 detected by a steering angle sensor SW4, and operates the front wheels 50 by rotating the pinion shaft 43. The pinion shaft 43 and the front wheels 50 are coupled to each other by an unillustrated rack bar, and rotation of the pinion shaft 43 is transferred to the front wheels through the rack bar. The EPAS device 42 is an example of a steering-related device.

Actuation of the steering device 40 is controlled by the EPAS microcomputer 400. For example, while the vehicle 1 is in the manual driving, the EPAS microcomputer 400 controls a manipulated variable of the electric motor 42a based on detection values of, for example, the steering angle sensor SW4. While the vehicle 1 is in the assisted driving or the automated driving, the EPAS microcomputer 400 basically calculates controlled variables of traveling devices (e.g., the EPAS device 42 in this embodiment) such that a target steering variable calculated by the computation device 110 described later can be obtained, and outputs control signals to the traveling devices. The EPAS microcomputer 400 is an example of a device controller.

Although specifically described later, in this embodiment, the power train ECU 200, the brake microcomputer 300, and the EPAS microcomputer 400 are configured to be communicable with one another. In the following description, the power train ECU 200, the brake microcomputer 300, and the EPAS microcomputer 400 will be simply referred to as device controllers.

In this embodiment, to enable the assisted driving and the automated driving, the travel control device 100 includes a computation device 110 that calculates a route on which the vehicle 1 is to travel and that determines a motion of the vehicle 1 for following the route. The computation device 110 is a computation hardware including one or more chips. Specifically, as illustrated in FIG. 3, the computation device 110 includes a memory storing a processor including a CPU and a plurality of modules.

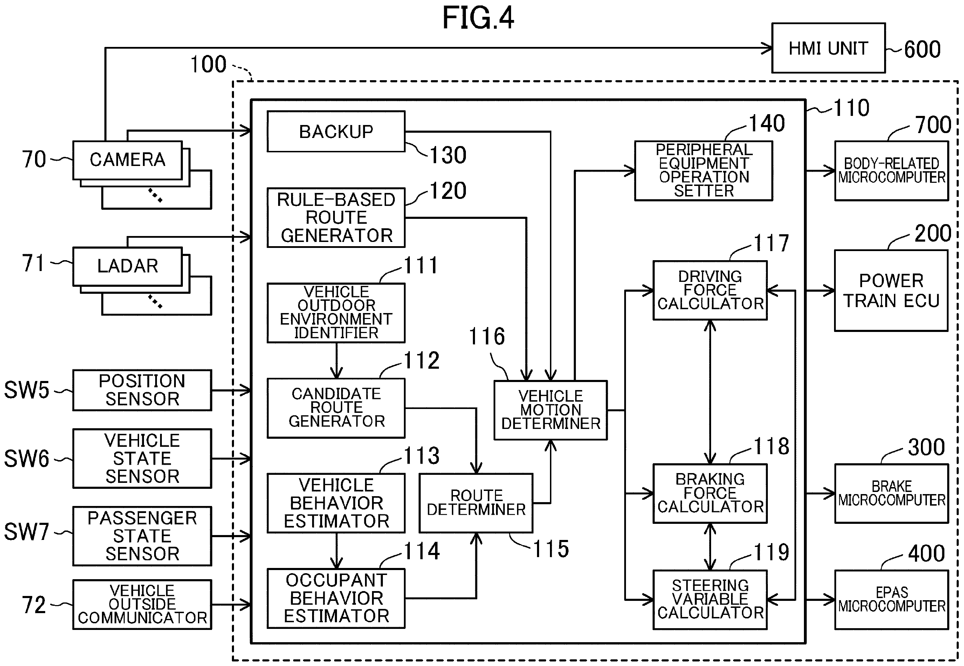

FIG. 4 illustrates a configuration for implementing a function (a route generating function described later) according to this embodiment in further detail. FIG. 4 does not illustrate all the functions of the computation device 110.

As illustrated in FIG. 1, the computation device 110 determines a target motion of the vehicle 1 and controls actuation of a device base on an output from, for example, a plurality of sensors. The sensors for outputting information to the computation device 110, for example, include: a plurality of cameras 70 disposed on, for example, the body of the vehicle 1 and used for taking images of vehicle outdoor environments; a plurality of radars 71 disposed on, for example, the body of the vehicle 1 and used for detecting an object outside the vehicle and other objects; a position sensor SW5 for detecting a position of the vehicle 1 (vehicle position information) by utilizing global positioning system (GPS); a vehicle state sensor SW6 constituted by outputs of sensors for detecting a vehicle behavior, such as a vehicle speed sensor, an acceleration sensor, and a yaw rate sensor, and used for acquiring a state of the vehicle 1; and an occupant state sensor SW7 constituted by, for example, an in-car camera and used for acquiring a state of an occupant of the vehicle 1. The computation device 110 receives communication information received by a vehicle outside communicator 72 and sent from another vehicle around the own vehicle, and traffic information received by the vehicle outside communicator 72 and sent from a navigation system.

Each of the cameras 70 is disposed to capture an image around the vehicle 1 by 360° horizontally. Each camera 70 captures an optical image representing vehicle outdoor environments and generates image data. Each camera 70 outputs the generated image data to the computation device 110. The cameras 70 are examples of an image acquirer that acquires information on vehicle outdoor environments.

The image data acquired by the cameras 70 is input to a human machine interface (HMI) unit 600 as well as the computation device 110. The HMI unit 600 displays information based on the acquired image data on, for example, a display device.

In a manner similar to the cameras 70, each of the radars 71 is disposed to detect an image in a range around the vehicle 1 by 360° horizontally. The radars 71 are not limited to a specific type, and a millimeter wave radar or an infrared ray radar may be employed. The radars 71 are an example of the image acquirer that acquires vehicle outdoor environments.

While the vehicle 1 is in the assisted driving or the automated driving, the computation device 110 sets a travel route of the vehicle 1 and sets a target motion of the vehicle 1 such that the vehicle 1 follows the travel route. The computation device 110 includes: an vehicle outdoor environment identifier 111 that identifies a vehicle outdoor environment based on an output from, for example, the cameras 70 in order to set a target motion of the vehicle 1; a candidate route generator 112 that calculates one or more candidate routes on which the vehicle 1 is capable of traveling, in accordance with the vehicle outdoor environment determined by the vehicle outdoor environment identifier 111; a vehicle behavior estimator 113 that estimates a behavior of the vehicle 1 based on an output from the vehicle state sensor SW6; an occupant behavior estimator 114 that estimates a behavior or an occupant of the vehicle 1 based on an output from the occupant state sensor SW7; a route determiner 115 that determines a route on which the vehicle 1 is to travel; a vehicle motion determiner 116 that determines a target motion of the vehicle 1 in order to allow the vehicle 1 to follow the route set by the route determiner 115; and a driving force calculator 117, a braking force calculator 118, and a steering variable calculator 119 that calculate target physical quantities (e.g., a driving force, a braking force, and a steering angle) to be generated by the traveling devices in order to obtain the target motion determined by the driving force calculator vehicle motion determiner 116. The candidate route generator 112, the vehicle behavior estimator 113, the occupant behavior estimator 114, and the route determiner 115 constitute a route setter that sets a route on which the vehicle 1 is to travel, in accordance with the vehicle outdoor environment identified by the vehicle outdoor environment identifier 111.

The computation device 110 also includes, as safety functions, a rule-based route generator 120 that identifies an object outside the vehicle according to a predetermined rule and generates a travel route that avoids the object, and a backup 130 that generates a travel route for guiding the vehicle 1 to a safe area such as a road shoulder.

The vehicle outdoor environment identifier 111, the candidate route generator 112, the vehicle behavior estimator 113, the occupant behavior estimator 114, the route determiner 115, the vehicle motion determiner 116, the driving force calculator 117, the braking force calculator 118, the steering variable calculator 119, the rule-based route generator 120, and the backup 130 are examples of modules stored in a memory 102.

### <Vehicle Outdoor Environment Identifier>

The vehicle outdoor environment identifier 111 receives outputs from, for example, the cameras 70 and the radars 71 mounted on the vehicle 1, and identifies a vehicle outdoor environment. The identified vehicle outdoor environment includes at least a road and an obstacle. In this embodiment, the vehicle outdoor environment identifier 111 compares three-dimensional information on surroundings of the vehicle 1 with a vehicle outdoor environment model, based on data of the cameras 70 and the radars 71 to thereby estimate a vehicle environment including a road and an obstacle. The vehicle outdoor environment model is, for example, a learned model generated by deep learning, and is capable of recognizing a road, an obstacle, and other objects with respect to three-dimensional information on surroundings of the vehicle.

For example, the vehicle outdoor environment identifier 111 specifies free space or a region where no objects are present through image processing, from images captured by the cameras 70. In the image processing here, a learned model generated by, for example, deep learning is used. Then, a two-dimensional map representing a free space is generated. The vehicle outdoor environment identifier 111 acquires information on a target around the vehicle 1, from outputs of the radars 71. This information is positioning information including a position and a speed, for example, of the target. Thereafter, the vehicle outdoor environment identifier 111 combines the generated two-dimensional map with the positioning information of the target, and generates a three-dimensional map representing surroundings around the vehicle 1. In this embodiment, information on locations and image-capturing directions of the cameras 70, and information on locations and transmission directions of the radars 71 are used. The vehicle outdoor environment identifier 111 compares the generated three-dimensional map with the vehicle outdoor environment model to thereby estimate a vehicle environment including a road and an obstacle. In deep learning, a deep neural network (DNN) is used. Examples of the DNN include convolutional neural network (CNN).

### <Candidate Route Generator>

The candidate route generator 112 generates candidate routes on which the vehicle 1 can travel, based on, for example, an output of the vehicle outdoor environment identifier 111, an output of the position sensor SW5, and information transmitted from the vehicle outside communicator 72. For example, the candidate route generator 112 generates a travel route that avoids an obstacle identified by the vehicle outdoor environment identifier 111 on a road identified by the vehicle outdoor environment identifier 111. The output of the vehicle outdoor environment identifier 111 includes travel route information on a travel route on which the vehicle 1 travels, for example. The travel route information includes information on a shape of the travel route itself and information on an object on the travel route. The information on the shape of the travel route includes, for example, a shape (linear, curve, or curve curvature), a travel route width, the number of lanes, and a lane width of the travel route. The information on the object includes, for example, a relative position and a relative speed of the object with respect to the vehicle, and attributes (e.g., types and direction of movement) of the object. Examples of the type of the object include a vehicle, a pedestrian, a road, and a mark line.

In this embodiment, the candidate route generator 112 calculates a plurality of candidate routes by a state lattice method, and based on a route cost of each of the calculated candidate routes, selects one or more candidate routes. The routes may be calculated by other methods.

The candidate route generator 112 sets an imaginary grid area on a travel route based on travel route information. This grid area includes a plurality of grid points. With each of the grid points, a position on the travel route is specified. The candidate route generator 112 sets a predetermined grid point as a target arrival position. Then, the candidate route generator 112 computes a plurality of candidate routs by a route search using the plurality of grid points in the grid area. In the state lattice method, a route is branched from a given grid point to another grid point located ahead of the given grid point in the traveling direction of the vehicle. Thus, the candidate routes are set so as to pass the plurality of grid points sequentially. The candidate routes include, for example, time information representing times when the vehicle passes the grid points, speed information on, for example, speeds and accelerations at the grid points, and information on other vehicle motions.

The candidate route generator 112 selects one or more travel routes based on a route cost from the plurality of candidate routes. Examples of the route cost include the degree of lane centering, an acceleration of the vehicle, a steering angle, and possibility of collision. In a case where the candidate route generator 112 selects a plurality of travel routes, the route determiner 115 selects one travel route.

### <Vehicle Behavior Estimator>

The vehicle behavior estimator 113 measures a state of the vehicle from outputs of sensors for detecting a behavior of the vehicle, such as a vehicle speed sensor, an acceleration sensor, and a yaw rate sensor. The vehicle behavior estimator 113 generates a vehicle 6-axis model showing a behavior of the vehicle.

The vehicle 6-axis model here is a model of accelerations in 3-axis directions of "front and rear," "left and right," and "upward and downward" of the traveling vehicle and angular velocities in 3-axis directions of "pitch," "roll," and "yaw." That is, the vehicle 6-axis model is a numerical model obtained by capturing a motion of the vehicle not only in a plane in terms of a classical vehicle motion engineering, and but also by reproducing a behavior of the vehicle by using a total of six axes of pitching (Y axis), roll (X axis) motion, and movement along a Z axis (upward and downward motion of the vehicle body) of the vehicle body on which an occupant is seated on four wheels with suspensions interposed therebetween.

The vehicle behavior estimator 113 applies the vehicle 6-axis model to the travel route generated by the candidate route generator 112, and estimates a behavior of the vehicle 1 in following the travel route.

### <Occupant Behavior Estimator>

The occupant behavior estimator 114 estimates especially physical conditions and feelings of a driver, from a detection result of the occupant state sensor SW7. Examples of the physical conditions include good health, mild fatigue, ill health, and loss of consciousness. Examples of the feelings include pleasant, normal, bored, frustrated, and unpleasant.

For example, the occupant behavior estimator 114 extracts a face image of a driver from images captured by, for example, a camera placed in a cabin, and specifies the driver. The extracted face image and information on the specified driver are applied to a human model as inputs. The human model is a learned model generated by deep learning, for example, and physical conditions and feelings are output for each person that can be a driver of the vehicle 1. The occupant behavior estimator 114 outputs the physical conditions and the feelings of the driver output from the human model.

In a case where biometric sensors such as a skin temperature sensor, a heart rate sensor, a blood flow sensor, and a sweat sensor, are used for the occupant state sensor SW7 for acquiring information on a driver, the occupant behavior estimator 114 measures biometric of the driver from outputs of the biometric sensors. In this case, the human model receives biometrics of each person who can be a driver of the vehicle 1, and outputs physical conditions and feelings of the person. The occupant behavior estimator 114 outputs the physical conditions and the feelings of a driver output from the human model.

As the human model, a model that estimates feelings of a human to a behavior of the vehicle 1 may be used with respect to a person who can be a driver of the vehicle 1. In this case, an output of the vehicle behavior estimator 113, biometrics of the driver, and estimated feelings are managed chronologically to constitute a model. This model enables, for example, a relationship between a heightened emotion (consciousness) of a driver and a behavior of the vehicle to be predicted.

The occupant behavior estimator 114 may include a human body model as a human model. The human body model specifies, for example, a neck muscle strength supporting a head mass (e.g., 5 kg) and front, rear, left, and right G. When receiving a motion (acceleration G and jerk) of the vehicle body, the human body model outputs predicted physical feelings and subjective feelings of an occupant. Examples of the physical feelings of the occupant include comfortable/moderate/uncomfortable, and examples of subjective feelings include unpredicted/predictable. Since a vehicle body behavior in which the head of the occupant is bent over backward even slightly, for example, is uncomfortable to the occupant, a travel route causing such a behavior is not selected by referring to the human body model. On the other hand, a vehicle body behavior with which the head moves forward as if the occupant makes a bow allows the occupant to take a posture against this vehicle body behavior easily, and thus, does not make the occupant feel uncomfortable immediately. Thus, a travel route causing such a behavior can be selected. Alternatively, a target motion may be determined to avoid shaking of the head of the occupant or may be dynamically determined to make the head active, by referring to the human body model
The occupant behavior estimator 114 applies the human model to a vehicle behavior estimated by the vehicle behavior estimator 113, and estimates a change of physical conditions and a change of feelings of the current driver with respect to the vehicle behavior.

### <Route Determiner>

The route determiner 115 determines a route on which the vehicle 1 is to travel, based on an output of the occupant behavior estimator 114. In a case where the candidate route generator 112 generates one generated route, the route determiner 115 sets this route as a route on which the vehicle 1 is to travel. In a case where the candidate route generator 112 generates a plurality of generated routes, in consideration of an output of the occupant behavior estimator 114, the route determiner 115 selects a route on which an occupant (especially a driver) feels comfortable most, that is, a route on which a driver does not feel redundancy such as excessive caution in avoiding an obstacle, among a plurality of candidate routes.

### <Rule-based Route Generator>

The rule-based route generator 120 identifies an object outside the vehicle according to a predetermined rule and generates a travel route avoiding the object, based on outputs from the cameras 70 and the radars 71, without using deep learning. In a manner similar to the candidate route generator 112, the rule-based route generator 120 calculates a plurality of candidate routes by a state lattice method, and based on a route cost of each of the candidate routes, selects one or more candidate routes. The rule-based route generator 120 calculates a route cost based on, for example, a rule in which the vehicle does not enter within a few or several meters around the object. The rule-based route generator 120 may also calculate a route by other methods.

Information of routes generated by the rule-based route generator 120 is input to the vehicle motion determiner 116.

### <Backup>

The backup 130 generates a route for guiding the vehicle 1 to a safe area such as a road shoulder based on outputs from the cameras 70 and the radars 71, in a case where a sensor, for example, is out of order or an occupant is not in good physical condition. For example, the backup 130 sets a safe region in which the vehicle 1 can be brought to an emergency stop from information of the position sensor SW5, and generates a travel route to the safe area. In a manner similar to the candidate route generator 112, the backup 130 calculates a plurality of candidate routes by a state lattice method, and based on a route cost of each of the candidate routes, selects one or more candidate routes. This backup 130 may also calculate a route by other methods.

Information on the routes generated by the backup 130 is input to the vehicle motion determiner 116.

### <Vehicle Motion Determiner>

The vehicle motion determiner 116 sets a target motion for a travel route determined by the route determiner 115. The target motion refers to steering and acceleration and speed-reduction that allow the vehicle to follow the travel route. The target motion determiner 115 computes a motion of the vehicle body by referring to the vehicle 6-axis model, with respect to the travel route selected by the route determiner 115.

The vehicle motion determiner 116 determines a target motion that allows the vehicle to follow the travel route generated by the rule-based route generator 120.

The vehicle motion determiner 116 determines a target motion that allows the vehicle to follow the travel route generated by the backup 130.

If the travel route determined by the route determiner 115 greatly significantly deviates from the travel route generated by the rule-based route generator 120, the vehicle motion determiner 116 selects the travel route generated by the rule-based route generator 120 as a route on which the vehicle 1 is to travel.

If sensors (especially the cameras 70 or the radars 71), for example, are out of order or a poor physical condition of an occupant is estimated, the vehicle motion determiner 116 selects the travel route generated by the backup 130 as a route on which the vehicle 1 is to travel.

### <Physical Quantity Calculator>

The physical quantity calculator is constituted by the driving force calculator 117, the braking force calculator 118, and the steering variable calculator 119. To achieve a target motion, the driving force calculator 117 calculates a target driving force to be generated by the power train devices (the engine 10 and the transmission 20). To achieve the target motion, the braking force calculator 118 calculates a target braking force to be generated by the braking device 30. To achieve the target motion, the steering variable calculator 119 calculates a target steering variable to be generated by the steering device 40.

The driving force calculator 117, the braking force calculator 118, and the steering variable calculator 119 are communicable with each other. The driving force calculator 117, the braking force calculator 118, and the steering variable calculator 119 are configured to calculate target physical quantities so as to share information on physical quantities calculated by these calculators and to be capable of executing control for using information in cooperation with one another. In other words, the driving force calculator 117, the braking force calculator 118, and the steering variable calculator 119 are configured to calculates target physical quantities that are instructed to traveling devices in a case where the traveling devices are controlled in cooperation with one another.

Accordingly, in a state where a road is slippery, for example, it is required to reduce the rotation speed of the wheels (i.e., so-called traction control) so as not to rotate the wheels idly. To reduce idle rotation of the wheels, an output of the power train is reduced or a braking force of the braking device 30 is used. The driving force calculator 117 and the braking force calculator 118 can stabilize traveling of the vehicle by setting both a driving force generated by the power and a braking force generated by the braking device 30 at optimum values.

In cornering of the vehicle 1, the driving force calculator 117 calculates a target driving force based on a driving state of the vehicle, and calculates a driving force reduction variable in accordance with a target steering variable calculated by the steering variable calculator 119 to calculate a final target driving force of the vehicle in accordance with the target driving force and the driving force reduction variable. In this manner, a deceleration in accordance with the target steering variable is generated, and rolling and pitching in which a front portion of the vehicle 1 sinks are caused to occur in synchronization to cause a diagonal roll posture. By causing the diagonal roll posture, loads on the outer front wheels 50 increase so that the vehicle 1 is allowed to turn with a small steering angle. Thus, it is possible to reduce a rolling resistance on the vehicle 1.

As another example, in vehicle stability control (dynamic vehicle stability), based on a current steering angle and a current vehicle speed, if a difference occurs between a target yaw rate and a target lateral acceleration calculated as ideal turning state of the vehicle 1 and a current yaw rate and a current lateral acceleration, the braking devices 30 for the four wheels are individually actuated or an output of the power train is increased or reduced so as to cause the current yaw rate and the current lateral acceleration to return to the target values. In this embodiment, information on controlled variables can be directly transmitted among the physical quantity calculators 117 to 119. Thus, brake actuation of the wheels and start of output increase/decrease, which are stability control, can be performed significantly early from detection of a vehicle instability state. Reduction of stability control in a case where a driver performs counter steering can also be conducted in real time with reference to a steering angle speed and other information of the steering variable calculator 119.

As yet another example, a front wheel driving vehicle with high power can employ steering angle-linked output control that reduces an output of the power train to avoid an instable state of the vehicle when an accelerator is pressed with a large steering angle. In this control, the driving force calculator 117 refers to a steering angle and a signal on a steering angle calculated by the steering variable calculator 119, and reduces an output immediately. Thus, a driving field preferable for a driver without a sense of sudden intervention can be achieved.

### <Peripheral Equipment Operation Setter>

The peripheral equipment operation setter 140 sets operations of devices related to the body of the vehicle 1, such as a lamp and doors, based on an output of the vehicle motion determiner 116. For example, the peripheral equipment operation setter 140 sets a direction of the lamp when the vehicle 1 follows the travel route determined by the route determiner 115, for example. In the case of guiding the vehicle 1 to a safe area set by the backup 130, for example, the peripheral equipment operation setter 140 turns hazard flashers on or unlocks the doors, after the vehicle 1 has reached the safe area.

### <Output Destination of Computation Device>

A computation result in the computation device 110 is output to the power train ECU 200, the brake microcomputer 300, the EPAS microcomputer 400, and a body-related microcomputer 600. Specifically, the power train ECU 200 receives information on a target driving force calculated by the driving force calculator 117, the brake microcomputer 300 receives information on a target braking force calculated by the braking force calculator 118, the EPAS microcomputer 400 receives information on a target steering variable calculated by the steering variable calculator 119, and the body-related microcomputer 600 receives information on operations of devices related to the body and set by the peripheral equipment operation setter 140.

As described above, the power train ECU 200 basically calculates a fuel injection timing of the injector 12 and an ignition timing of the ignition plug 13 such that a target driving force is achieved, and outputs control signals to these traveling devices. The brake microcomputer 300 basically calculates a controlled variable of the brake actuator 33 such that a target driving force is achieved, and outputs a control signal to the brake actuator 33. The EPAS microcomputer 400 basically calculates the amount of current to be supplied to the EPAS device 42 such that a target steering variable is achieved, and outputs a control signal to the EPAS device 42.

As described above, in this embodiment, the computation device 110 only calculates target physical quantities to be output from the traveling devices, and controlled variables of the traveling devices are calculated by the device controllers 200 to 400. Accordingly, the amount of calculation of the computation device 110 decreases so that the calculation speed of the computation device 110 can be increased. The device controllers 200 to 400 only need to calculate actual controlled variables and output control signals to the traveling devices (e.g., the injector 12). Consequently, the device controllers 200 to 400 can be miniaturized as small as possible.

Since the device controllers 200 to 400 calculate the controlled variables, the computation device 110 only needs to calculate rough physical quantities. Thus, computation speeds may be lower than those of the device controllers 200 to 400. As a result, computation accuracy of the computation device 110 can be enhanced.

Thus, in this embodiment, the vehicle travel control device includes the computation device 110 and a plurality of device controllers 200 to 400 configured to control actuation of a plurality of traveling devices (e.g., the injector 12) based on a computation result of the computation device 110, the plurality of traveling devices including a power train-related device constituting a power train device. The computation device 110 includes; a vehicle outdoor environment identifier 111 configured to identify a vehicle outdoor environment based on an output from an image acquirer configured to acquire information on a vehicle outdoor environment; a route setter (e.g., the route calculator 112) configured to set a route on which the vehicle 1 is to travel, in accordance with the vehicle outdoor environment identified by the vehicle outdoor environment identifier 111; the vehicle motion determiner 116 configured to determine a target motion of the vehicle 1 for following the route set by the route setter; a plurality of physical quantity calculators 117 to 119 configured to calculates target physical quantities to be generated by the traveling devices in order to achieve the target motion determined by the vehicle motion determiner 116. The physical quantity calculators 117 to 119 are communicable to one another, and are configured to calculate target physical quantities with which control for causing the traveling devices to operate in coordination with one another. The device controllers 200 to 400 calculate controlled variables of the traveling devices such that the target physical quantities calculated by the physical quantity calculators 117 to 119 are achieved, and output control signals to the traveling devices. With this configuration, the physical quantity calculators 117 to 119 are configured to be communicable with one another, and to calculate target physical quantities with which the traveling devices operate in coordination with one another. Thus, an optimum motion of the vehicle 1 can be achieved at each moment. As a result, in the travel control device 100 that controls actuation of the traveling devices so as to follow a route calculated by the computation device 110, it is possible to achieve a vehicle behavior that hardly provides a driver with an incongruity sense.

### <Other Control>

During assisted driving of the vehicle 1, the driving force calculator 117, the braking force calculator 118, and the steering variable calculator 119 may change a target driving force, for example, in accordance with the state of a driver of the vehicle 1. For example, while the driver enjoys driving (e.g., feeling of the driver is "enjoy"), the target driving force, for example, may be reduced so that the driving state approaches manual driving as close as possible. On the other hand, if the driver is in a poor physical condition, the target driving force, for example, is increased so that the driving state approaches automated driving as close as possible.

### (Other Embodiments)

The technique disclosed here is not limited to the embodiment described above, and can be changed without departing from the gist of claims.

For example, in the embodiment described above, the route determiner 115 determines a route on which the vehicle 1 is to travel. However, the technique is not limited to this example, and the route determiner 115 may be omitted, and the vehicle motion determiner 116 may determine a route on which the vehicle 1 is to travel. That is, the vehicle motion determiner 116 may serve as both a part of the route setter and the target motion determiner.

The embodiment described above is merely an example, and the scope of the present disclosure should not be construed as limiting. The scope of the present disclosure is defined by the claims, and all changes and modifications that come within the meaning and range of equivalency of the claims are intended to be embraced within the scope of the present disclosure.

### INDUSTRIAL APPLICABILITY

The technique disclosed here is useful as a vehicle travel control device for controlling traveling of a vehicle.

### DESCRIPTION OF REFERENCE CHARACTERS

- 1: vehicle
- 12: injector (traveling device, power train-related device)
- 13: ignition plug (traveling device, power train-related device)
- 16: valve mechanism (traveling device, power train-related device)
- 20: transmission (traveling device, power train-related device)
- 33: brake actuator (traveling device, brake-related device)
- 42: EPAS device (traveling device, steering-related device)
- 100: vehicle travel control device
- 110: computation device
- 111: vehicle outdoor environment identifier
- 112: route calculator (route setter)
- 113: vehicle behavior estimator (route setter)
- 114: occupant behavior estimator (route setter)
- 115: route determiner (route setter)
- 116: vehicle motion determiner (target motion determiner)
- 117: driving force calculator (physical quantity calculator)
- 118: braking force calculator (physical quantity calculator)
- 119: steering variable calculator (physical quantity calculator)
- 200: power train ECU (device controller)
- 300: brake microcomputer (device controller)
- 400: EPS microcomputer (device controller)

## Claims

1. A vehicle travel control device configured to control traveling of a vehicle, the vehicle travel control device comprising:
a computation device; and
a plurality of device controllers configured to individually control actuation of a plurality of traveling devices mounted on the vehicle, based on a computation result of the computation device, wherein
the computation device includes
a vehicle outdoor environment identifier configured to identify a vehicle outdoor environment based on an output from an image acquirer, the image acquirer being configured to acquire a vehicle outdoor environment,
a route setter configured to set a route on which the vehicle is to be travel, in accordance with the vehicle outdoor environment identified by the vehicle outdoor environment identifier,
a target motion determiner configured to determine a target motion of the vehicle for following the route set by the route setter, and
a plurality of physical quantity calculators configured to calculate target physical quantities to be generated by the traveling devices, in order to achieve the target motion determined by the target motion determiner,
the physical quantity calculators are configured to be communicable with one another and to calculate target physical quantities with which control of causing the traveling devices to operate in coordination with one another is performed, and
the device controllers calculate controlled variables of the traveling devices such that the target physical quantities calculated by the physical quantity calculators are achieved, and the device controllers output control signals to the traveling devices.

2. The vehicle travel control device according to claim 1, wherein
the traveling devices comprise a power train-related device constituting a power train device, a brake-related device constituting a braking device, and a steering-related device constituting a steering device,
the physical quantity calculators comprise a driving force calculator configured to calculate a driving force generated by the power train device, a braking force calculator configured to calculate a braking force generated by the braking device, and a steering variable calculator configured to calculate a steering variable generated by the steering device, and
the driving force calculator, the braking force calculator, and the steering variable calculator are configured to be communicable with one another, and to calculate target physical quantities with which control of causing the traveling devices to operate in coordination with one another is performed.

3. The vehicle travel control device according to claim 2, wherein
the driving force calculator and the braking force calculator calculate a target driving force and a target braking force, respectively, based on a target steering variable calculated by the steering variable calculator.

4. The vehicle travel control device according to claim 3, wherein
the driving force calculator calculates the target driving force based on a driving state of the vehicle, calculates a driving force reduction variable based on the target steering variable calculated by the steering variable calculator, and calculates a final target driving force based on the target driving force and the driving force reduction variable.
